# EUROPEAN PATENT APPLICATION

(11) **EP 0 779 417 A2**
(43) Date of publication of application: **18.06.1997**
(21) Application number: 96119557.5
(22) Date of filing: 05.12.1996
(51) Int. Cl.: F01N 7/08, F16L 27/111, F16L 51/02

(54) **A flexible duct with a corrugated double wall for decoupling the exhaust pipe of a motor vehicle**

(30) Priority: 12.12.1995 IT TO950990
(71) Applicant: FLEXIDER S.p.A., I-10156 Torino (IT)
(72) Inventor: Ballone, Tony, 10123 Torino (IT)
(74) Representative: Plebani, Rinaldo

(57) **Abstract**

A flexible duct (1) for interposing between the exhaust manifold of the engine of a motor vehicle and the subsequent exhaust pipe so as to decouple them from each other, constituted by a flexible tubular element (2) with a continuous double wall (7), a pair of sleeves (12) fixed on the ends (3;4) of the tubular element and a pair of collars (14) arranged outside the ends of the tubular element so as to hold this to the sleeves; the tubular element is made of two superimposed sheets (5;6) of stainless steel, bent into a closed tube and deformed axially so as to form a series of circumferential corrugations which provide flexibility; the two sheets (5;6) are of different thickness, the inner one being thicker than the outer; this arrangement provides greater reduction of the noise typical of a corrugated pipe and also damps the noise of the engine; in addition, it increases the fatigue resistance to stresses and the rigidity of the flexible duct compared to similar pipes with a double wall of the same overall thickness made up of two walls each of the same thickness.

## Description

The present invention relates to a flexible duct with a corrugated double wall for decoupling the exhaust pipe of a motor vehicle and, in particular, to a flexible metal duct for interposing in use between the exhaust manifold of a motor vehicle and the subsequent exhaust pipe.

It is known that the engines of motor vehicles are subjected to strong vibrations during their operation, especially during powerful acceleration; therefore the connection between the exhaust manifold of the engine and the subsequent exhaust pipe, which is fixed to the chassis, requires an intermediate decoupling element, to prevent the vibrations of the engine from being transmitted to the rest of the exhaust pipe.

In the prior art, it is common to interpose a decoupling element constituted by a flexible double-walled coupling sleeve, made of two accordion-pleated steel sheets of the same thickness, between the exhaust manifold of the engine of a motor vehicle and the subsequent exhaust pipe; the double-walled sleeve is welded to a collar at each end, these being welded in turn directly to the exhaust manifold and the exhaust pipe; the sleeve is also covered by a protective steel outer sleeve; although such a sleeve coupling does prove effective in preventing any escape of exhaust gases, it is rather noisy owing to the turbulence caused by the gas passing along its accordion-pleated walls, and in addition its fatigue resistance and rigidity are not suited to the more demanding applications in high-powered sports engines.

The object of the present invention is to provide a flexible duct for connecting the exhaust manifold of the engine of a motor vehicle to an exhaust pipe which is free of the disadvantages found in similar prior art arrangements and which, in addition to effectively preventing any escape of exhaust gases, is efficient in reducing vibrations and noise both inside and outside the vehicle and is also highly resistant to fatigue from mechanical and thermal stresses while ensuring a rigidity which is at least comparable to that provided by arrangements currently available in the art.

The above object is achieved by the present invention, which refers to a flexible duct with a corrugated double wall for decoupling the exhaust pipe of the engine of a motor vehicle, interposable between the exhaust manifold of the engine and the exhaust pipe, including a pair of attachment sleeves, a flexible tubular element with a continuous double wall, fixed to the sleeves, and a pair of collars arranged externally on the ends of the tubular element to fix this to the sleeves, characterised in that the continuous double wall of the flexible tubular element is made of two corrugated metal sheets of different thickness, superposed so as to be in contact with each other.

According to another aspect of the invention, the inner sheet is thicker than the outer sheet.

This and other characteristics of the invention will become clear from the following description of a preferred embodiment thereof, provided purely by way of non-limitative example, with reference to the appended drawings, in which:
Figure 1 shows a partial axial section of the flexible duct made according to the present invention; and
Figure 2 shows a detail, on an enlarged scale, of the double-walled duct of Figure 1.

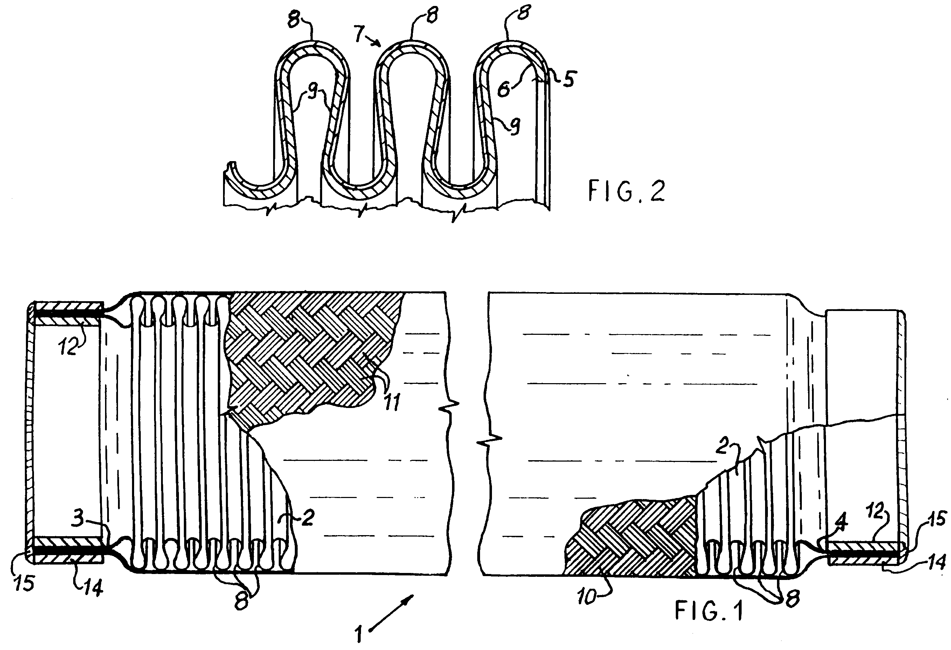

With reference to Figures 1 and 2, a flexible duct according to the invention, shown partially sectioned and indicated 1, can be interposed between the exhaust manifold of the engine of a motor vehicle and a subsequent exhaust pipe, neither of which is shown in the drawings.

The flexible duct 1 is constituted by an accordion-pleated inner tube 2, ending at either end in cylindrical portions 3 and 4; the tube 2 is manufactured from two strips 5 and 6 (see Figure 2) of metal sheet of different thickness, preferably of stainless steel with a high fatigue resistance to mechanical and thermal stresses; the two strips 5 and 6 are superimposed and made to adhere to each other, they are then bent into a cylinder and longitudinally welded so as to form a double wall 7 with the less thick strip 5 outside and deformed by means of heat and axial compression so as to form a series of circumferential corrugations 8 with substantially conical walls.

In a preferred, but not limitative example, the thickness of the outer sheet 5 is selected as 0.20 mm, while the thickness of the inner sheet 6 is of 0.30 mm giving the double wall 7 an overall thickness of 0.50mm.

The tube 2 is inserted into a tubular sleeve 10 of metal mesh 11 which is the same length as the overall length of the corrugated tube 2 and is deformed locally where it meets the two end portions 3 and 4 so as to adhere to the outside thereof.

Two cylindrical annular coupling sleeves 12, suitable for being forced with little interference into the portions 3 and 4 of the corrugated tube 2, are inserted therein, the said coupling sleeves constituting an element for rigidifying and strengthening the ends 3, 4 of the tube 2 so as to facilitate its connection to the manifold at one end and to the subsequent exhaust pipe at the other.

Surprisingly, tests showed that a reduction of the thickness of the outer sheet considerably reduces the noise made by gases passing through the flexible tube 2 and is also responsible for damping engine noise carried by gas entering the pipe.

In addition, it was noted with surprise that use of a thinner sheet on the outside gave the flexible tube 2 greater fatigue resistance to mechanical stress caused by the continuous, powerful vibrations coming from the engine and to cyclical thermal stresses.

These surprising advantages achieved by the present invention were documented by comparing an embodiment of the invention with an example of the prior art having a double wall of the same overall thickness but in which the two sheets composing the double wall were of equal thickness.

The radially superposed ends of the coupling sleeves 12, of the corrugated tube 2 and of the metal sleeve 10 are pressed hot into a cylindrical collar 14 which is welded to them so as to form a continuous, circular frontal weld 15 which is air-tight and prevents gases from escaping between the various components.

## Claims

1. A flexible duct with a corrugated double wall for decoupling the exhaust pipe of the engine of a motor vehicle, interposable between the manifold of the engine and the exhaust pipe, including a pair of coupling sleeves (12), a flexible tubular element (2) with a continuous double wall (7) fixed to the said sleeves and a pair of collars (14) arranged outside the ends (3;4) of the tubular element so as to hold this latter to the said sleeves (12),
characterised in that the said continuous double wall (7) of the flexible tubular element (2) is made of two corrugated metal sheets (5;6) of different thickness, superposed in contact with each other.

2. A flexible duct according to Claim 1, characterised in that a first (5) of the said metal sheets, arranged on the outside of the double wall (7), is less thick than the second, inner sheet (6).

3. A flexible duct according to Claim 2, characterised in that the thickness of the said first metal sheet is 0.20 mm and the thickness of the second metal sheet is 0.30 mm.
